# EUROPEAN PATENT APPLICATION

(11) **EP 4 703 296 A1**
(43) Date of publication of application: **04.03.2026**
(21) Application number: 24198282.6
(22) Date of filing: 03.09.2024
(51) Int. Cl.: B65G 1/04, A62C 3/00

(54) **A STORAGE GRID**

(71) Applicant: AutoStore Technology AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to a storage grid (500) for an automated storage and retrieval system. The grid (500) comprises a plurality of storage columns and one or more channels (510, 520, 530), wherein the one or more channels are configured to: accumulate a flowable fire suppressant upon the storage grid receiving the flowable fire suppressant; and designate a zone (512, 522, 532) of the storage grid, the zone comprising at least one storage column of the plurality of storage columns.

## Description

### TECHNICAL FIELD

The disclosure relates to a storage grid of an automated storage and retrieval system. More particularly, it relates to a storage grid including one or more channels for accumulating a flowable fire suppressant, and a method of controlling a hypothetical fire in a storage grid.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system is the system described herein and it involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed, and/or refilled, just as an example, or otherwise handled.

As a safety measure, warehouses usually include fire detection and fire suppression systems. Detection systems detect conditions that may be indicative of fire in the warehouse, such as smoke or heat. In response, the detection systems trigger alarms and/or the fire suppression systems. Traditional warehouse fire suppression systems involve ceiling sprinklers supplying fire suppressant downward into the warehouse. When triggered, the alarm may call fire fighters to the warehouse to supply fire suppressant directly onto the fire from the warehouse aisles using a firehose.

Nevertheless, tackling a hypothetical fire that may have developed within the storage grid of an automated storage and retrieval system presents several challenges, and traditional warehouse fire suppression systems may struggle to control any potential fire outbreaks effectively. For example, storage grids may have a complex, densely-packed, and multi-level structure; and the fire, such as a deep-seated, electrical, or smouldering fire, may be concealed or covered deep within the grid. Serious problems can therefore potentially arise when fire fighters are not be able to access critical sections of the grid or direct fire suppressant efficiently and effectively.

It would therefore be beneficial to provide systems and methods which address any possible problems and deficiencies of traditional warehouse fire suppression systems in automated storage and retrieval systems of the type described herein.

One or more aspects of the invention set forth in the present application are set out in the claims.

### BRIEF DESCRIPTION OF THE DRAWINGS

The disclosure will now be described in more detail in connection with a number of arrangements shown in the accompanying drawings, in which:
Fig. 1 shows a perspective view of a storage system as described herein, i.e. comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Figs. 5a to 5c each show a top down view of a storage grid comprising a fire zone designated by one or more channels;
Fig. 6 shows a top down view of a storage grid comprising four fire zones;
Figs. 7a and 7b show a side view of a stack of containers forming a channel;
Figs. 8a and 8b show perspective views of a base plate for the stack of containers of Figs. 7a and 7b;
Fig. 9 shows a perspective view of a storage column comprising a barrier suitable for forming a channel; and
Fig. 10 shows a method flowchart for controlling a fire in a storage grid.

### DETAILED DESCRIPTION

### Storage grid zones overview

In overview, the present disclosure relates to a storage grid for an automated storage and retrieval system, the grid comprising a plurality of storage columns and one or more channels. The channels described herein are configured to accumulate flowable fire suppressant which has been supplied to the storage grid and received by the channels, thereby building up a wall or region of fire suppressant within the grid to help control a fire outbreak. The flowable fire suppressant may be water, foam, or any other suitable fire suppressant known in the art. Preferably, the channels are at least partially sealed or contain retaining-means (e.g., an absorbent material) to facilitate the channels filling up or flooding with the accumulated suppressant.

The one or more channels described herein are configured to designate a zone of the storage grid, the zone comprising at least one storage column. For example, the channel(s) may define a border of a zone, may act as a barrier dividing the storage grid into two or more zones, or may encompass (i.e., fill) a zone. In examples where a channel encompasses a zone, the entire zone accumulates the fire suppressant upon the storage grid receiving the flowable fire suppressant. In some examples, the one or more channels surround or encircle a zone, and, in the event of a fire occurring in the zone, the surrounding channels may isolate, cool down, and/or even suppress the fire. Encircling a fire may be particularly advantageous if the fire zone cannot be flooded with fire suppressant, for example if the fire has exposed a hole in the grid or if the fire is too big to reach effectively with hoses, for example in the case of an intervention from firefighters.

A channel as described herein may comprise a stack of storage containers, a storage column, a group of consecutively adjacent storage columns, or may exist in a region of the grid between adjacent storage columns, such as in the case of a channel integrated in a framework of the grid, e.g., a channel between neighbouring storage columns. A group of consecutively adjacent storage columns may refer to one channel extending contiguously across the adjacent storage columns, or may refer to a plurality of individual channels defined in adjacent storage columns (but not necessarily fluidly connected to one another).

In another arrangement, a storage grid may also be separated into the two or more zones using one or more channels of consecutively adjacent storage columns extending from one end of the grid to an opposing end of the storage grid. Upon receiving flowable fire suppressant, the channels form a wall extending between opposite ends of the storage grid, thereby separating the grid into two zones.

As described herein, a zone may either be permanent feature of the grid designated by the structure or location of the one or more channels, or, alternatively, the zone may be a temporary region designated by the accumulation of fire suppressant in one or more specifically targeted channels. By specifically accumulating fire suppressant in one or more targeted channels, as discussed in more detail below, a custom zone can be 'drawn' out in response to a specific fire location or size. This can be a temporary zone, defined as a specific response to the fire. Furthermore, a zone can be of any size within a storage grid. For example, the zone may consist of one storage column, or the zone may be a region comprising a plurality of storage columns.

Accordingly, it will be appreciated that there are various methods in which channels as described herein can be configured to designate fire zones in the storage grid. By using such channels in this way, the zones, or just the borders of the zones, can be flooded to create a column of fluid which may efficiently cool down, suppress, douse, and/or isolate fires. In some arrangements, the channels (upon receiving fire suppressant) act as a moat, or fire line, surrounding the fire and may also create a fire break in the storage grid fuel to prevent further spread of the fire; this is achieved by the one or more channels interrupting the provision of potential new fuel (in the form of more goods of goods containers) to the fire and/or by the one or more channels starving the fire of oxygen or air.

A zone as described herein can generally be considered as a region of the grid which is not in fluid communication with other regions of the grid. This zone of the storage system may comprise the storage columns within which flammable goods are stored. As used herein, the goods are considered flammable if they have a flash point less than 50°C above the ambient temperature in the automated storage and retrieval system, or if their flash point is at or below 60°C, at or below 50°C, at or below 40°C, or at or below 30°C. Each zone may store goods with varying flammability or may otherwise be provided as a buffer. Although a storage grid may comprise multiple zones, the zones may still be provided with the same rail system and may thus be accessible by the same robotic container-handling vehicles (as described in more detail below).

The storage grid may further comprise at least one impermeable base plate positioned beneath the one or more channels to reduce or prevent the flowable fire suppressant from draining away from the channels. There may be one base plate extending across a base of the storage grid, or there may be multiple base plates, such as one base plate for each channel.

In some arrangements, the storage grid further comprises a stack of storage containers positioned within a storage column. The base of each storage container in the stack of storage containers is provided with an opening, to allow flowable fire suppressant to flow therethrough (upon the container receiving the flowable fire suppressant). The openings within the stack of containers allow the fire suppressant to flow into underlying containers, facilitating the distribution of fire suppressant through the stack of containers and/or to douse a deeper fire in the storage grid.

There are multiple ways to create the channels as described herein. In one example, each channel is defined by a respective sealed stack of storage containers. In particular, each stack of storage containers can be provided with at least one base plate configured to seal the opening of the lowermost storage container in the stack, thereby sealing the bottom container in the storage column and preventing fire suppressant from draining away. In such examples, the one or more channel extends through the length of the stack of containers. To facilitate the sealing of the base of the stack of storage containers, the base plate may be compressible and/or may comprise walls for receiving and sealing with the lowermost storage container in the stack. A compressible base plate is sufficiently compressible such that the openings of the lowermost storage container can be plugged and sealed by moulding to the compressible base plate under the weight of the container stack and/or the fire suppressant.

In other examples, the one or more channels may be defined by at least one barrier positioned in the storage grid. For example, sealed barriers may be positioned between neighbouring storage containers in the framework of the storage grid, the barriers thereby defining the lateral walls of channels as described herein extending through the grid. Similarly, adjacent edges of two or more neighbouring storage containers in the storage grid may abut, or the gap between the containers may be provided with a sealing element, providing a lateral seal for one or more channels (e.g., to prevent flowable fire suppressant from draining out between storage containers). In other examples, the barrier may comprise a sealed sleeve which is positioned around a stack of storage containers, such that a channel can be created within the sleeve comprising the stack of storage containers.

The one or more channels described herein, and the corresponding zone(s) of the storage grid, may be of various shapes and sizes. For example, the zone may cover less than half of the total volume of the storage grid, and there may be more than one designated zone in the storage grid. The channels preferably extend from the top of a storage grid to a base of the storage grid, to maximise the height of the accumulated fire suppressant for a more effective fire control.

The disclosure herein also relates to a method of controlling a fire in the storage grid of an automated storage and retrieval system. The method comprises supplying a flowable fire-suppressant into the storage grid and causing the flowable fire-suppressant to accumulate in one or more channels as described herein, in the storage grid. As discussed above, the one or more channels may designate a zone in the storage grid, the zone comprising at least one storage column.

The flowable fire-suppressant may be delivered by various different means, such as through a sprinkler system, nozzles, hoses, conduit or pipe outflows, or a combination thereof, which may be positioned on a ceiling above the storage grid or positioned in/by the channels. In any case, the suppressant is delivered such that it may accumulate in the one or more channels. For example, the fire suppressant may be broadly distributed above the storage grid and thereby received by the one or more channels, or may be directed (e.g., with a firehose) to a specific one or more of the channels.

By having channels configured to receive and accumulate flowable fire suppressant, automated fire systems and/or firefighters are able to more efficiently direct fire suppressant to critical regions of the storage grid, particularly regions which may otherwise have been relatively inaccessible.

Finally, the disclosure also relates to a computer-readable medium, or computer program, comprising instructions which, when executed by a computer (e.g., in a control and monitoring system), cause the computer to carry out any of the methods described herein.

### Automated storage and retrieval system overview

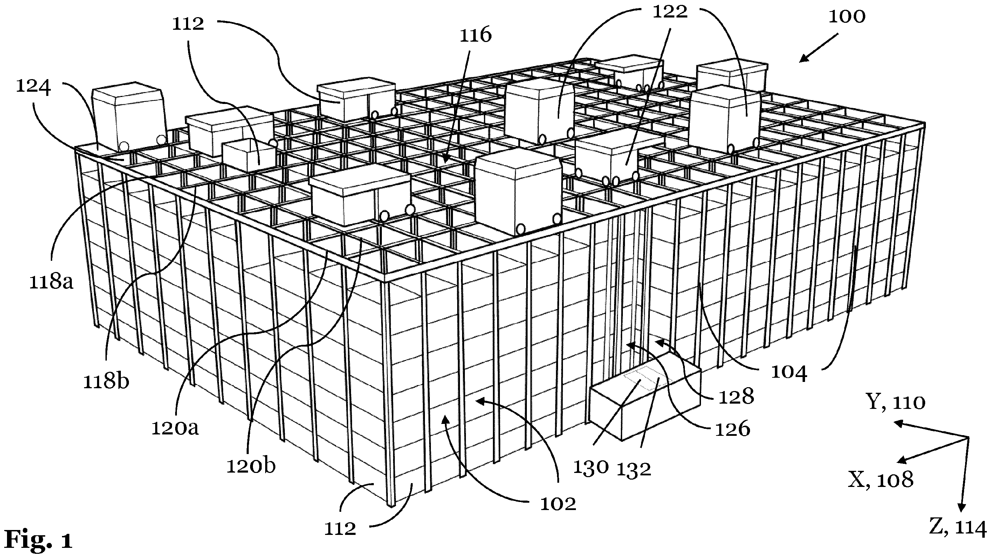

Referring now to the system shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

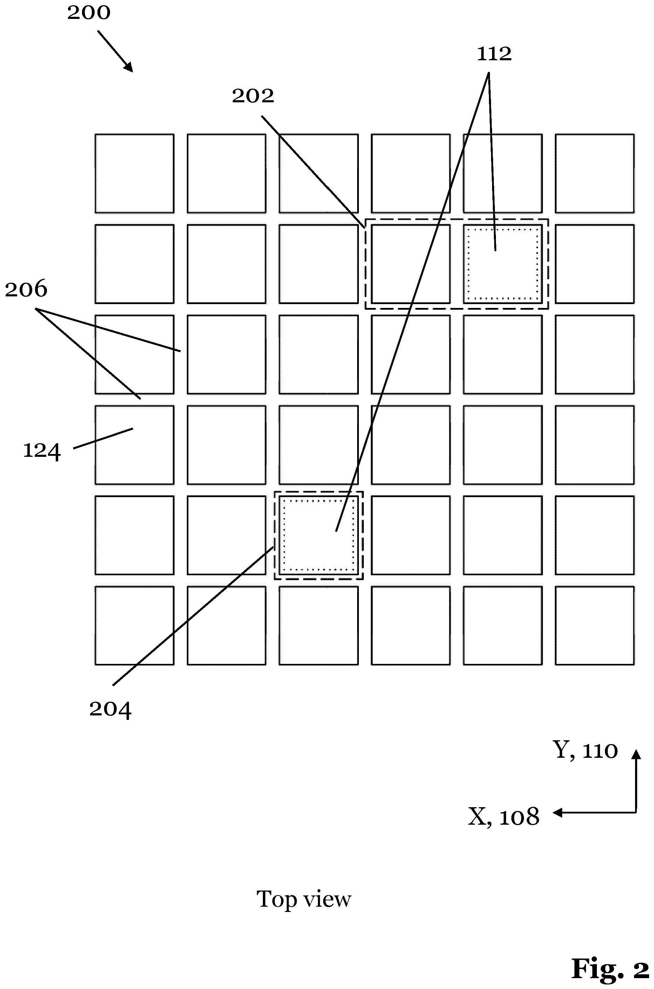

Referring to Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

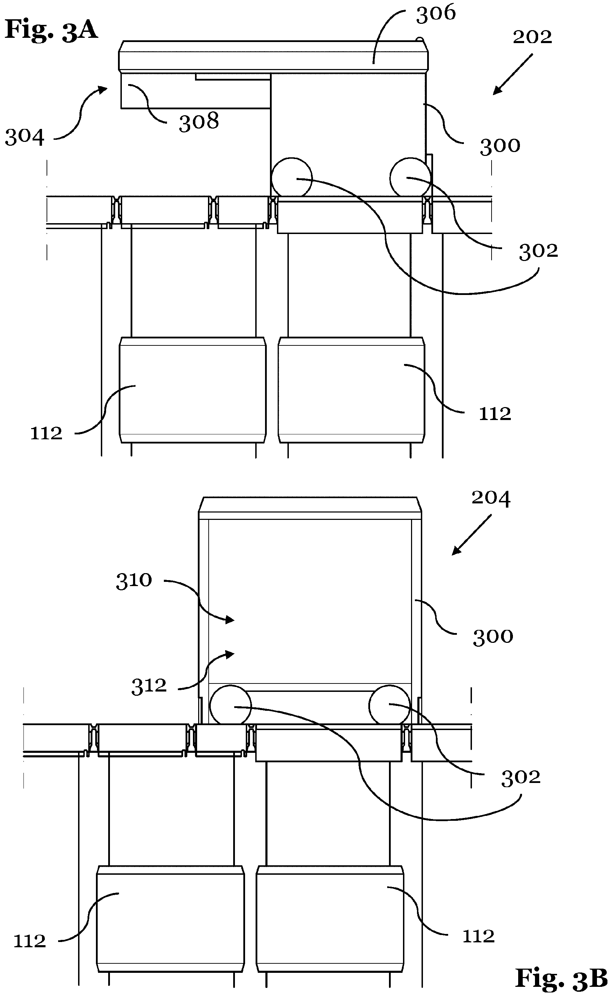

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

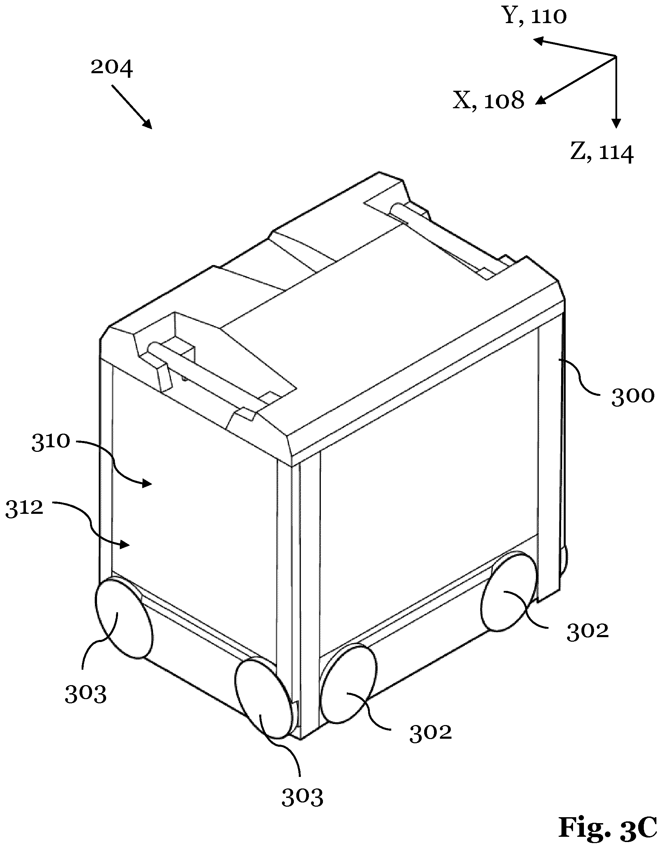

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

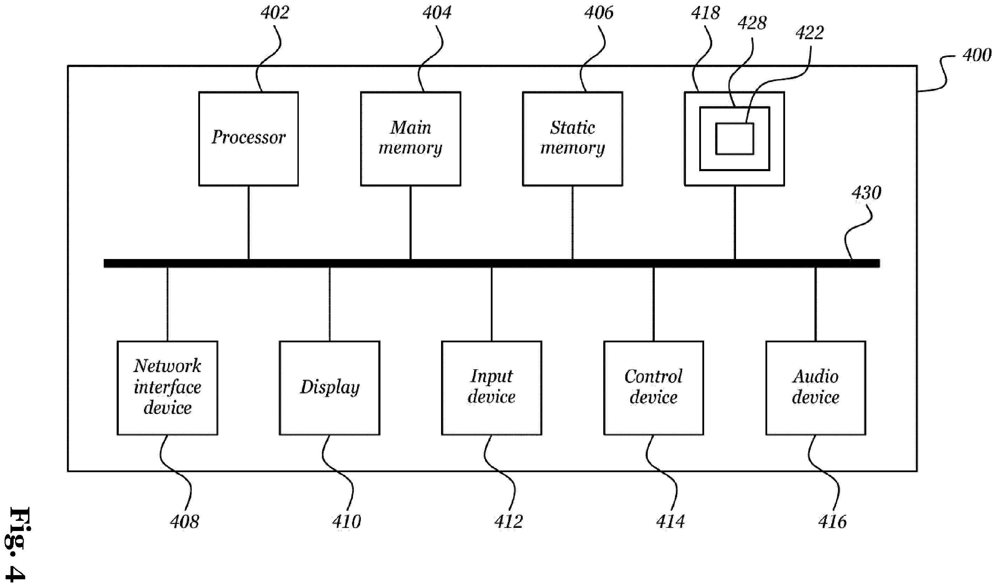

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Channels and fire zones in a storage grid

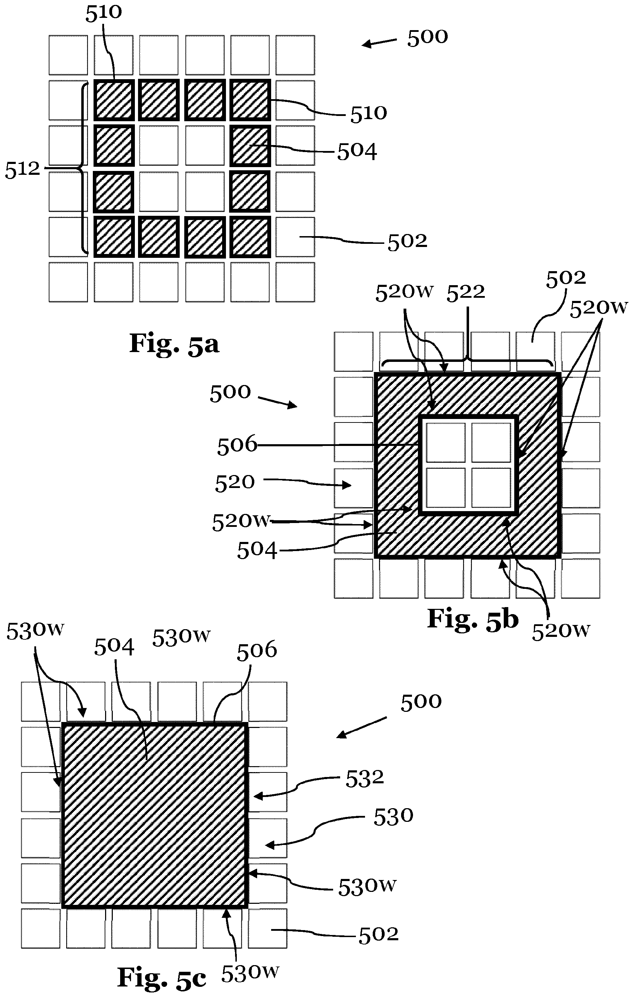

Figs. 5a, 5b, and 5c illustrate three options for designating a zone 512, 522, 532 of the storage grid 500 as described herein, as viewed from a top-down perspective. In each these figures, the zone comprises a central 4×4 grid (i.e., 16 storage columns) of the storage grid 500, and each zone 512, 522, 532 is designated by respective channels 510, 520, 530 as described herein. The channels 510, 520, and 530 are filled with fire-suppressant 504, as indicated by the textured regions. It will be appreciated that other shapes and sizes of zones, other than those illustrated, can be readily achieved by modifying the location or dimension of the channels 510, 520, or 530.

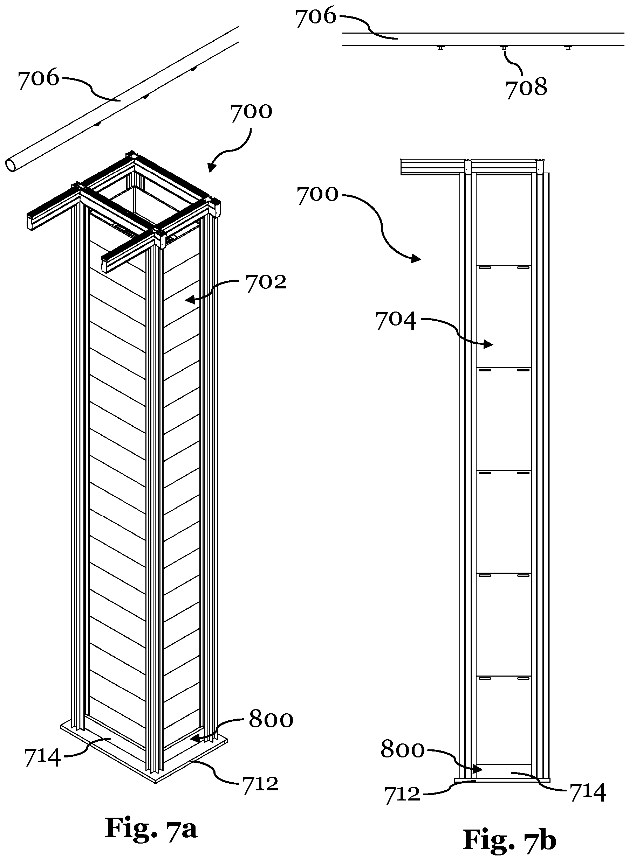

In Fig. 5a, the zone 512 is designated by a plurality of channels 510 (as here illustrated, the zone is designated by twelve channels 510), consisting of consecutively adjacent storage columns 502 each filled with a fire suppressant 504. The storage columns 502 of the channels 510 comprise an upper opening for receiving suppressant and a sealed base for reducing drainage of suppressant, as discussed in more detail with regard to Figs. 7 to 9. The channels 510 therefore extend vertically through the storage grid 500 and together form a wall of accumulated fire suppressant 504 encircling the zone 512.

Turning to Fig. 5b and 5c, a zone 522, 532 may be designated by a single channel 520, 530. Fig. 5b illustrates a channel 520 which encircles the zone 522 of the grid 500, and Fig. 5c illustrates a channel 530 which covers (i.e., extends across the entirety of) the zone 532 of the grid 500. In both examples, barriers 506 are provided in the storage grid 500 between neighbouring storage columns 502 so to define sealed lateral walls 520w, 530w of the channel 520, 530 and thus to allow a flowable fire suppressant 504 to accumulate within the channel 520, 530.

Fire suppressant 504 is supplied to the channels 510, 520, 530 by a fire suppression delivery unit, such as the unit illustrated in Fig. 7. The delivery unit may be one or more sprinklers, a pipe, a hose, a mounted nozzle, or another means known in the art, and may be positioned above the grid 500 to distribute fire suppressant to the channels 510, 520, 530, or positioned elsewhere in fluidic communication with a channel. In one example, a fire suppression delivery unit is provided above a storage grid and includes a nozzle and an adjustable mount. The nozzle is configured to output the fire suppressant 504 and the adjustable mount is configured to direct the nozzle to a target storage column 502. At least one fire suppression unit may be provided to deliver fire suppressant 504 into each storage column 502 within a specified region or zone 512, 522, 532 of the storage system 500.

The fire suppressant 504 may be any agent (fluid or otherwise) suitable for suppressing, extinguishing or otherwise controlling fire. For instance, the fire suppressant may comprise at least one of: a dry chemical fire suppressant, such as monoammonium phosphate, sodium bicarbonate, potassium bicarbonate, or potassium chloride; a foam fire suppressant, such as aqueous film-forming foam, film-forming fluoroprotein, or compressed air foam; a wet chemical fire suppressant, such as potassium acetate, potassium carbonate, or potassium citrate; a clean fire suppressant (or an inert gas fire suppressant), such as halons, carbon dioxide, or inert gas; a dry powder fire suppressant, such as sodium chloride; a condensed aerosol fire suppressant; water; and/or any other suitable fire suppressant. Dry chemical fire suppressant, foam fire suppressant, and dry powder fire suppressant smother fires by forming a barrier between the fuel of the fire and the source of oxygen in the atmosphere. Wet chemical fire suppressant similarly forms a soapy film over the fuel. Clean, or gaseous, fire suppressant and condensed aerosol fire suppressant displace oxygen in the atmosphere surrounding a fire with carbon dioxide or other inert gasses. Water, when used as a fire suppressant, cools burning material. Preferably, the fire suppressant includes a foam fire suppressant.

Accumulating fire suppressant 504 in the zones 512, 522, 532 enables a quicker fire response by creating volumes and/or regions of accumulated fire suppressant 504 to cool, isolate, and prevent spread of the potential fire in the zone 512, 522, 532. The fire suppression systems described herein may therefore be particularly suitable for preventing damage and fire spread from or to a specific zone. For instance, the specific zone may comprise storage columns storing higher value goods or more flammable goods than are stored in the remainder of the storage system, and spread of fire in that specific zone may have a greater impact.

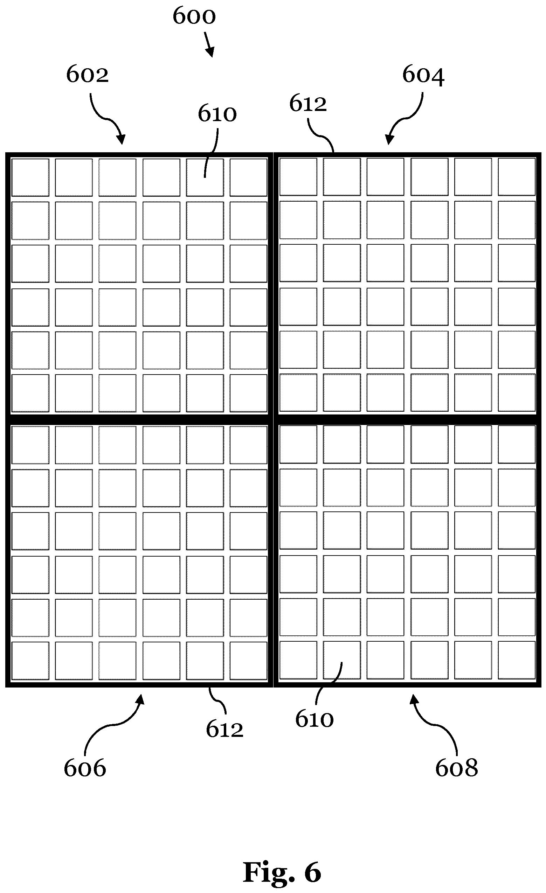

Turning now to Fig. 6, a different storage grid 600 (compared to the one seen in Fig. 5) is separated into four zones 602, 604, 606, 608, each comprising a plurality of storage columns 610. Barriers 612 are provided which surround each zone 602, 604, 606, 608 to create a large channel (i.e., one channel corresponding to each zone), similar to the channel described with regard to Fig. 5c. It will be appreciated that the grid 600 could also be separated into four zones 602, 604, 606, 608 using alternative means, such as using the channels seen in Figs. 5a or 5b. It will also be appreciated that a different number of zones of different configurations and sizes would also be possible.

One or more of the zones 602, 604, 606, 608 may be selected for storage of more flammable goods which have a higher fire risk. Such goods may be beneficially stored in a fire zone which can be quickly isolated or doused with fire suppressant, e.g., using the systems and methods described herein. Additionally or alternatively, goods which are more susceptible to fire damage may be stored separately from other goods in the storage grid 600 in one or more of the zones 602, 604, 606, 608. In the event of a fire, the fire damage-susceptible goods may be isolated from a fire using one or more channels described herein.

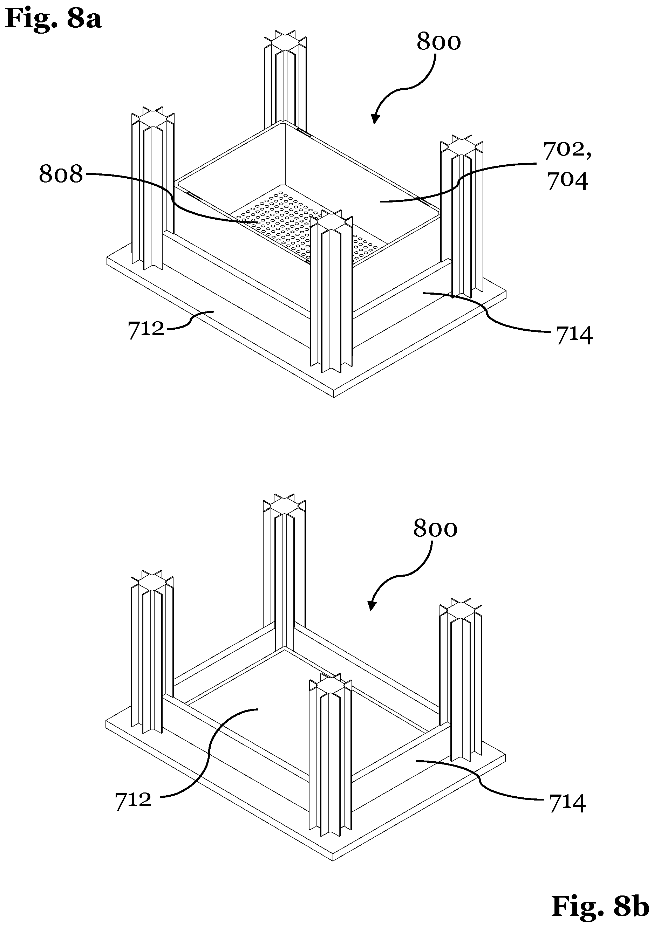

Fig. 7a and 7b each illustrate a stack 700 of storage containers suitable for defining a channel as described herein, such as the channel 510 discussed above with reference to Fig. 5a. The stack 700 of storage containers is provided with a base 800, comprising edges 714 and a base plate 712. The stack may comprise a stack of storage bins 702, as illustrated in Fig. 7a, or may comprise a stack of storage frames 704, as illustrated in Fig. 7b. Each storage frame is suitable for stacking storage bins within. In both cases, and turning to Figs. 8a and 8b, the storage bins 702 or the storage frames 704 are provided with openings 808 which allow a flowable fire suppressant to flow down the stack of storage containers and to the base 800. The base 800, using edges 714 and/or base plate 712, seals the openings of the lowermost storage container, such that the stack 700 may define a sealed channel better configured to accumulate a flowable fire suppressant 504. The base 800 is preferably compressible, such that upon receiving the weight of the stack 700 and/or the extra weight of fire suppressant, the openings 808 of the lowermost container press and mould into the compressible base plate to improve the seal therewith.

As illustrated in Figs. 7a and 7b, an automated storage and retrieval system further comprises a fire suppression delivery unit 706 positioned above the storage grid. The delivery unit 706 comprises nozzles 708 positioned above storage columns in the storage grid. The nozzles 708 can be activated, individually or as a whole, to release flowable fire suppressant 504 onto the storage grid 500, 600, thereby causing fire suppressant to accumulate in the channel defined by the sealed stack 700 of containers positioned below.

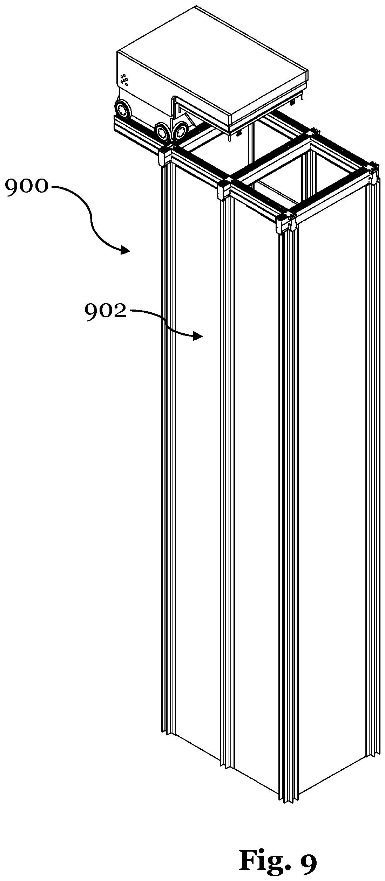

Fig. 9 illustrates an alternative storage column 900 suitable for defining a channel, such as the channels 520, 530 discussed above with reference to Figs. 5b and 5c. The storage column 900 comprises barriers 902 which extend between frames of the storage grid 500, 600 and span the height of the storage grid 500, 600, thereby sealing neighbouring storage columns from one another. The barriers 902 may be provided between all frames within the storage grid 500, 600, or may be only provided in certain storage columns of the grid 500, 600. By providing adjacent barriers 902, a sealed region in the grid may be formed, thereby defining a channel 510, 520, 530.

Storage containers held within the storage column 900 may also comprise openings 808, to facilitate the flow and distribution of fire suppressant through a stack of storage containers in the sealed storage column 902 and to increase a likelihood of a fire deep within the stack of storage containers being doused by the fire suppressant 504.

### Methods for fire control

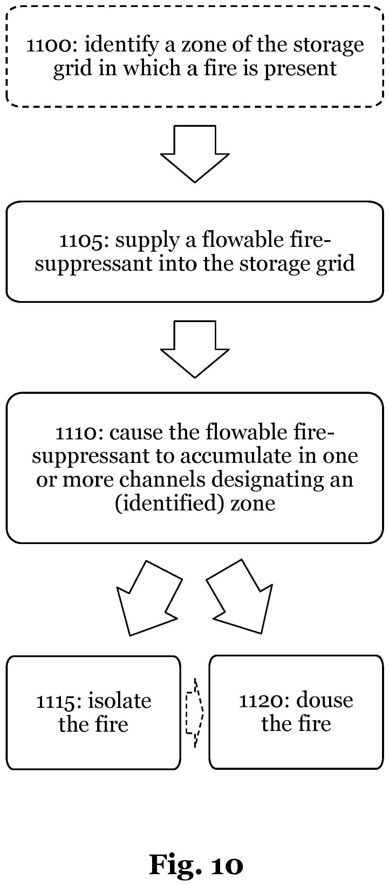

Fig. 10 shows a method of controlling a fire in an automated storage and retrieval system, in accordance with the systems described above. The method may be manually- or computer-implemented and may be carried out by a controller of the storage and retrieval system, such as processing system 400.

The method comprises, at step 1100, identifying a zone in which a fire is present. Identification of the location of a fire can be carried out using any conventional techniques, such as heat, smoke, flame or carbon monoxide detectors. By identifying a zone in which a fire is present, the step 1100 may facilitate a more precise or controlled fire suppression system, in which only relevant/critical zones of the grid are addressed and supplied with fire suppressant (in the next step). The step 1100 may facilitate a reduction or prevention of water/chemical damage to other regions of the grid which are not at immediate risk of fire.

In some implementations, it may not be possible, practical, or productive to detect a location of the fire (it may instead suffice to determine that a fire is occurring), and the method may start at step 1105.

At step 1105, a flowable fire-suppressant 504 is supplied into the storage grid 500, 600. Supplying the flowable fire suppressant may comprise feeding, pumping, opening valves or otherwise releasing the flowable fire suppressant into the storage grid. The fire suppressant may be distributed through pipes, conduits, nozzles, sprinklers, and/or hoses, either above the storage grid or directly into one or multiple regions of the storage grid.

At step 1110, the method comprises causing the flowable fire suppressant 504 to accumulate in the one or more channels 510, 520, 530 designating the identified zone 512, 522, 532. It will be appreciated that for a channel to accumulate fire suppressant, a channel must be supplied with suppressant at a faster rate than the suppressant drains out of the channel. This process will also depend on the relevant fluid properties of the fire suppressant, such as viscosity etc.

The flowable-fire suppressant 504 can be distributed across most or all of the storage grid 500, 600 (e.g., through a large sprinkler system), or it can be selectively distributed above or to specific regions or columns of the grid (e.g., through a nozzle on an adjustable mount). When distributing to most or all of a storage grid, fire suppressant 504 will only significantly accumulate in the storage columns which are at least substantially sealed (and thus define one or more channels as described herein) and drain out of substantially non-sealed, or relatively sealed at a lower degree, storage columns elsewhere. In this way, zones 510, 520 530 of the storage grid 500, 600 may be predefined as discussed above. In particular, the channels 512, 522, 532 may comprise barriers 902, base plates 800, or other structural means, as described herein, and causing the flowable fire-suppressant 504 to accumulate may comprise distributing flowable fire-suppressant 504 above the grid such that it (only) accumulates in the predefined channels 512, 522, 532.

Alternatively, for a selective distribution of fire suppressant 504, a localised sprinkler, a hose, or a mounted nozzle may selectively distribute or direct fire suppressant 504 into targeted regions or targeted storage columns of the grid. For example, most or all storage columns in the grid may define channels 510, and causing the flowable fire-suppressant 504 to accumulate may comprise directing flowable fire suppressant 504 to accumulate in one or more specific channels 510 so as to designate a zone 512. This allows the zone 512 to be drawn up and designated in real time, or in response to an outbreak of fire in a specific (identified) area of the storage grid 500, 600.

Turning to steps 1115 and 1120 of Fig. 10, by accumulating the flowable fire suppressant 504 in one or more channels 510, 520, 530 designating a zone 512, 522, 532 of the grid 50, 600, the method proceeds to either isolating the fire or dousing the fire. In particular, in step 1115, the channels 510, 520, 530 of accumulated fire suppressant 504 preferably encircle the fire, in order to provide a complete barrier 520w around the fire and isolate the fire to prevent further spread. Additionally or alternatively, the channel(s) 532 may cover an entire zone 530 in which a fire is present, such that causing the flowable fire suppressant 504 to accumulate in the one or more channels 530 leads to dousing the zone, and thus dousing the fire.

### Penultimate comments

Further examples of the presently disclosed systems and methods include the following.

A storage column 102 for a storage grid 500, 600 of an automated storage and retrieval system, the column comprising: a stack of storage containers 702, wherein the base 800 of each storage container 702 comprises one or more openings 808; and a base plate 712, wherein the base plate 712 seals the one or more openings 808 of the lowermost storage container 702 in the stack, thereby allowing a fluid 504 to accumulate in the stack of storage containers 702. The walls and/or the upper edge 714 of each of the storage containers 702 in the stack may be provided lateral seals to facilitate the accumulation of a fluid within the stack of storage containers 702. The storage container may be an individual bin 702 or may be a frame 704 for stacking multiple bins within. The storage column 102 and/or the base plate 712 may further comprise the same features as discussed in the above description.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage grid for an automated storage and retrieval system, the storage grid comprising a plurality of storage columns for storing storage containers, said plurality of storage columns also defining one or more channels,
wherein the one or more channels are configured to:
accumulate a flowable fire suppressant upon the storage grid receiving the flowable fire suppressant, and
designate a zone of the storage grid, the zone thereby comprising at least one of said storage columns.

2. The storage grid of any preceding claim, wherein the one or more channels comprise a group of consecutively adjacent storage columns.

3. The storage grid of any preceding claim, further comprising at least one impermeable base plate, wherein the one or more channels are positioned above the base plate.

4. The storage grid of claim 3, further comprising at least one stack of storage containers, and wherein an opening is provided in the base of each of the storage containers in the stack of storage containers.

5. The storage grid of claim 4, wherein:
the at least one base plate is configured to seal the opening of the lowermost storage container in the stack of storage containers; and
each of the one or more channels is defined by a respective stack of storage containers.

6. The storage grid of claim 5, wherein the base plate is compressible.

7. The storage grid of any preceding claim, wherein the one or more channels are defined by at least one barrier positioned in the storage grid.

8. The storage grid of any preceding claim, wherein adjacent edges of two or more neighbouring storage containers in the storage grid abut, or are provided with a sealing element, to form a lateral seal.

9. The storage grid of any of any preceding claim, wherein the one or more channels encircle the zone.

10. The storage grid of any preceding claim, wherein the zone covers less than half a total volume of the storage grid.

11. The storage grid of any preceding claim, wherein the channels extend from the top of a storage grid to a base of the storage grid.

12. The storage grid of any preceding claim, wherein the flowable fire-suppressant is water or foam.

13. A method of controlling a fire in an automated storage and retrieval system comprising a storage grid according to any preceding claim, the method comprising:
supplying a flowable fire suppressant into the storage grid; and
causing the flowable fire suppressant to accumulate in one or more channels in the storage grid.

14. The method of claim 13, further comprising:
identifying a zone in which a fire is present;
causing the flowable fire suppressant to accumulate in the one or more channels designating the identified zone.

15. A computer-readable medium, or computer program, comprising instructions which, when executed by a computer, cause the computer to carry out the method of any of claims 13 to 14.
